# EUROPEAN PATENT SPECIFICATION

(11) **EP 1 679 654 B1**
(45) Date of publication and mention of the grant of the patent: **19.08.2009**
(21) Application number: 05250101.2
(22) Date of filing: 11.01.2005
(51) Int. Cl.: G06T 5/20

(54) **Improvements in digital filtering**
Verbesserte digitale Filterung
Filtrage digitale améliorée

(43) Date of publication of application: 12.07.2006
(73) Proprietor: STMicroelectronics (Research & Development) Limited, Marlow, Buckinghamshire SL7 1YL (GB)
(72) Inventor: Smith, Stewart Gresty, Edinburgh EH10 4SA (GB)
(74) Representative: Cooper, John

(56) References cited:
- EP-A- 0 604 245
- EP-A- 1 003 332
- WO-A-01/26053
- US-A- 4 541 116
- US-A1- 2002 149 687
- ZAMPERONI P: "SOME ADAPTIVE RANK ORDER FILTERS FOR IMAGE ENHANCEMENT" PATTERN RECOGNITION LETTERS, NORTH-HOLLAND PUBL. AMSTERDAM, NL, vol. 11, no. 2, 1 February 1990 (1990-02-01), pages 81-86, XP000087881 ISSN: 0167-8655
- WANG J-H: "Prescanned minmax centre-weighted filters for image restoration" IEE PROCEEDINGS: VISION, IMAGE AND SIGNAL PROCESSING, INSTITUTION OF ELECTRICAL ENGINEERS, GB, vol. 146, no. 2, 23 April 1999 (1999-04-23), pages 101-107, XP006013788 ISSN: 1350-245X

## Description

The present invention relates to a method of digital filtering of a signal, in particular to a signal relating to an image.

Traditionally, the dominant noise sources that affect a CMOS image sensor are random noise (Gaussian), fixed-pattern noise FPN (1-D and 2-D Gaussian, dominated by 1-D column-FPN), and defectivity (low probability, pixels which are stuck-at-white).

However, as feature sizes shrink, different signal degradation mechanisms have an increased significance for CMOS sensors, such as random noise which is not purely Gaussian, and FPN which is 2-D Gaussian with a white quasi-Poisson distribution tail. Furthermore, electrically leaky pixels are more of a problem than pixels which are stuck-at-white.

The white distribution tail increases the incidence of couplets (neighbouring defective pixels) as stress on sensor increases (examples of stresses include gain, temperature and integration time).

Traditionally, defect correction attacks salient pixel defects, while noise reduction attacks Gaussian noise. However, as feature sizes shrink and CMOS sensors become sensitive to the different degradation mechanisms mentioned above, these separate tasks are converging, that is, some defect correction techniques have a utility in correcting for noise, and some noise reduction techniques have utility in correcting for pixel defects. However, neither type of technique deals with couplets.

Defect correction can use heavier filtering if targeted at known defects, as opposed to filtering all pixels on-the-fly. However this requires a defectivity map to be created and maintained, which involves large costs in terms of silicon area and test time. Larger kernel filters for defect correction also present difficulties in implementation, being big in terms of logic, line RAM; difficult to design because multiple RAM r/w access per pixel is required, and having a deleterious effect on image quality.

U.S. patent application US2002/0149687 A1 describes interpolation of color values in a color filter array context by some special median filtering of the colour values of the pixels surrounding a center pixel the missing color component of which is to be determined.

According to a first aspect of the present invention, there is provided a method of filtering a signal comprising a plurality of pixel values each of which is obtained from at least one pixel of an image sensing array, the method comprising the steps of: obtaining a central pixel value and a plurality of neighbouring pixel values; determining the average value of each opposing pair of pixel values; comparing each average value with the central pixel value; and replacing the central pixel value with the average value which is closest to the central pixel value.

Preferably, neigbouring pixel values are derived from neighbouring pixels.

Preferably, the outputs obtained from the application of the method to a first central pixel value are used as the inputs for the application of the method to a second pixel value.

This recursive method provides a greater attenuation of defective pixel couplets.

Preferably, the second pixel value is a neighbouring pixel value of the first pixel value.

Preferably, the method is applied to a set of defective pixel couplets in an image.

Preferably, the method is selectively applied to pixel values which are above or below a predetermined threshold.

Preferably, the predetermined threshold can be varied to select a level of filtering severity.

According to a second aspect of the present invention, there is provided apparatus for filtering a signal comprising a plurality of pixel values each of which is obtained from at least one pixel of an image sensing array, comprising:
read means for obtaining a central pixel value and a plurality of neighbouring pixel values; and
calculation means for determining the average value of each opposing pair of pixel values; comparing each average value with the central pixel value; and replacing the central pixel value with the average value which is closest to the central pixel value.

Preferably, neigbouring pixel values are derived from neighbouring pixels.

Preferably, the apparatus further comprises memory means to store the outputs obtained from a first central pixel value, said outputs forming the inputs for the calculation means when the apparatus operates on a second pixel value.

This recursive method provides a greater attenuation of defective pixel couplets.

Preferably, the second pixel value is a neighbouring pixel value of the first pixel value.

Preferably, the apparatus is arranged to operate on a set of defective pixel couplets in an image.

Preferably, the apparatus further comprises means to select pixel values which are above or below a predetermined threshold for operation on by the apparatus.

Preferably, the predetermined threshold can be varied to select a level of filtering severity.

According to a third aspect of the present invention, there is provided a CMOS image sensor comprising apparatus of the second aspect.

According to further aspects of the invention, there is provided a digital camera, an optical mouse, or a mobile phone comprising a digital camera, which comprises the CMOS image sensor of the third aspect.

The present invention will now be described, by way of example only, with reference to the accompanying drawings, in which:
Fig. 1 illustrates the logical structure of a digital filter; and
Figs. 2a and 2b illustrate non-recursive and recursive operations of the filter shown in Fig. 1.

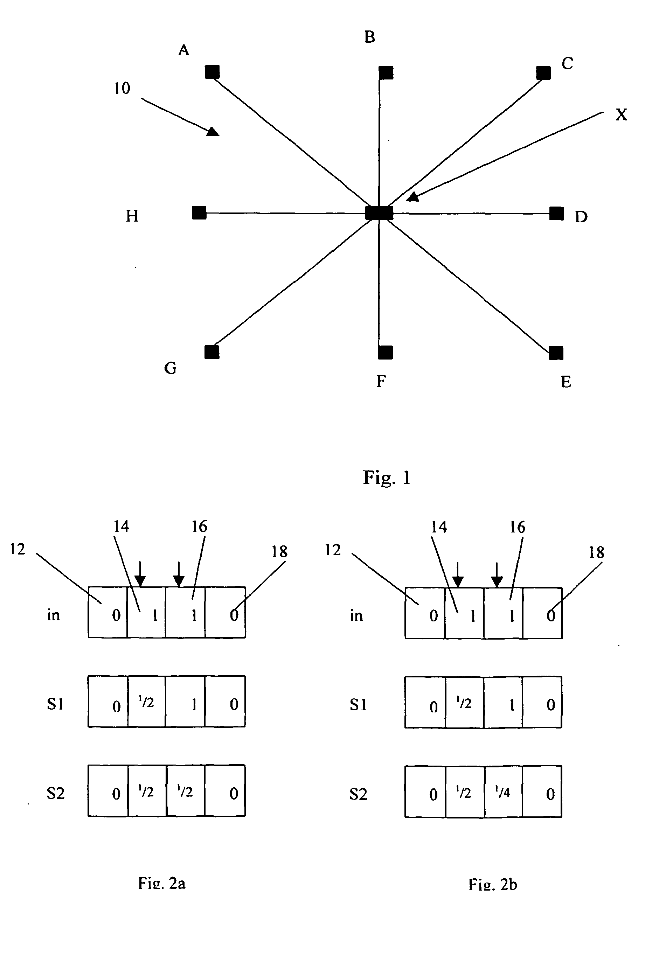

Fig. 1 illustrates the logical structure of a digital filter 10 that is applied to a series of pixel values derived from corresponding pixel sites in an image sensing array. The filter 10 operates to replace a central value, X, with a replacement value based on the values of its neighbours A-H, as follows:

The central pixel value X can be considered to have a number of opposing pairs of neighbours, that is two neighbours which are on opposite sides of the central pixel value in a horizontal, vertical or diagonal direction. The filter of Fig. 1 has four different opposing pairs, namely A and E; B and F; C and G; and D and H.

The filter of Fig. 1 calculates the average of each opposing pair of pixel values, compares each value with the central pixel value X, and then chooses the closest average as the replacement value for the central pixel value.

In a preferred embodiment, neigbouring pixel values to which the filter 10 is applied correspond to neighbouring pixel sites on an image sensing array.

The filter can be implemented in a recursive or a non-recursive manner, as illustrated in Fig. 2, which illustrates how a series of pixel values 12, 14, 16, 18 change as a filter moves to the right and in which the horizontally opposed neighbours (H and D in Fig. 1) give the values for the replacement value of a central pixel value.

Fig. 2a shows a non-recursive filter operation. An input line (in) has a series of pixel values, shown as 0,1,1,0. The pixel value 14 is chosen as the central value, such that after a first step (s1), the central pixel value 14 is replaced by the average of its two neighbours 12,16, that is, the value "1" is replaced by the average of "0" and "1", thus becoming "1/2".

The filter then moves to the right, such that pixel value 16 becomes the central pixel value. After a second step (s2) the central pixel value 16 of the original input (in) is replaced by the average of its two neighbours 14,18, that is, the value "1" is replaced by the average of "1" and "0", thus becoming "1/2".

Fig. 2b shows a recursive filter operation, in which the outputs from a first step form the inputs for the next step. Starting from the same input (in), the pixel value 14 is chosen as the central value, such that after a first step (s1), the central pixel value 14 is replaced by the average of its two neighbours 12,16, that is, the value "1" is replaced by the average of "0" and "1", thus becoming "1/2".

The filter then moves to the right, such that pixel value 16 becomes the central pixel value. After a second step (s2) the central pixel value 16 is replaced by the average of its two neighbours 14,18 as defined after the first step (s1), that is, the value "1" is replaced by the average of "1/2" and "0", thus becoming "1/4".

It can be seen that a non-recursive operation on a pixel couplet 14,16 attenuates the couplet, reducing its value by half in the example shown. The recursive operation results in a further attenuation, but has a more significant effect on the image than that resulting from the non-recursive operation.

The operation of the filter can be controlled by a feedback loop which monitors the effects of the filter and adjusts its application accordingly. When used in a digital camera, a camera control system can be provided which evaluates the effect the filter has on the image and adjusts the filter operation accordingly.

The filter could simply be switched on or off, or alternatively could be set to apply filtering to values which fall a predetermined amount above or below specific signal thresholds. The predetermined amount could be varied to provide a "fader" allowing an operating system to quantifiably vary the strength of filtering applied, depending on the required balance between defect correction and image destruction.

The filter of the present invention provides a number of advantages over prior art filters. Firstly, the filter can be specifically targeted at pixel couplets, being effective to significantly reduce their amplitude. Noise is structured into linear artifacts, for further processing by other noise reduction techniques. Furthermore, the logic cost is small, and there is no history requirement.

It will be appreciated that the digital filter could be used in image sensors for a wide range of applications, including digital cameras, mobile telephones with digital cameras, or optical mice to name but a few examples. The practical issues regarding implementation of the digital filter to any of these devices will be readily apparent to those skilled in the art, and so detailed description thereof is not necessary herein.

Improvements and modifications can be made to the above without departing from the scope of the invention.

## Claims

1. A method of filtering a signal comprising a plurality of pixel values (X, A-H) each of which is obtained from at least one pixel of an image sensing array, by obtaining a central pixel value (X) and a plurality of neighbouring pixel values (A-H) ; the method being **characterized by** the steps of :
determining the average value of each opposing pair of pixel values (A/E; B/F; C/G; D/H); comparing each average value with the central pixel value (X); and replacing the central pixel value (X) with the average value which is closest to the central pixel value.

2. The method of claim 1, wherein neigbouring pixel values (X, A-H) are derived from neighbouring pixels.

3. The method of claim 1 or claim 2, wherein the outputs obtained from the application of the method to a first central pixel value (14) are used as the inputs for the application of the method to a second pixel value (16).

4. The method of claim 3, wherein the second pixel value (16) is a neighbouring pixel value of the first pixel value (14).

5. The method of any preceding claim, applied to a set of defective pixel couplets (14,16) in an image.

6. The method of any preceding claim, selectively applied to pixel values which are above or below a predetermined threshold.

7. The method of claim 6, wherein the predetermined threshold can be varied to select a level of filtering severity.

8. Apparatus for filtering a signal comprising a plurality of pixel values (X, A-H) each of which is obtained from at least one pixel of an image sensing array, comprising:
read means for obtaining a central pixel value (X) and a plurality of neighbouring pixel values (AH) ; and **characterized by**:
calculation means for determining the average of each opposing pair of pixel values (A/E; B/F; C/G; D/H); comparing each value with the central pixel value (X); and replacing the central pixel value (X) with the average value which is closest to the central pixel value (X).

9. The apparatus of claim 8, wherein neigbouring pixel values are derived from neighbouring pixels.

10. The apparatus of claim 8 or claim 9, further comprising memory means to store the outputs obtained from a first central pixel value (14), said outputs forming the inputs for the calculation means when the apparatus operates on a second pixel value (16).

11. The apparatus of claim 10, wherein the second pixel value (16) is a neighbouring pixel value of the first pixel value (14).

12. The apparatus of any of claims 8 to 11, arranged to operate on a set of defective pixel couplets (14,16) in an image.

13. The apparatus of any of claims 8 to 12, further comprising means to select pixel values which are above or below a predetermined threshold for operation on by the apparatus.

14. The apparatus of claim 13, wherein the predetermined threshold can be varied to select a level of filtering severity.

15. A CMOS image sensor comprising the apparatus of any of claims 8 to 14.

16. An optical mouse, mobile phone or digital camera comprising the CMOS image sensor of claim 15.

## Patentansprüche

1. Ein Verfahren zum Filtern eines Signals, das eine Vielzahl von Pixelwerten (X, A-H) beinhaltet, von denen jeder aus mindestens einem Pixel einer Bildsensoranordnung erhalten wird, indem ein zentraler Pixelwert (X) und eine Vielzahl von benachbarten Pixelwerten (A-H) erhalten werden, wobei das Verfahren durch die folgenden Schritte **gekennzeichnet** ist:
Bestimmen des Durchschnittswerts jedes entgegengesetzten Paars Pixelwerte (A/E; B/F; C/G; D/H); Vergleichen jedes Durchschnittswerts mit dem zentralen Pixelwert (X) und
Ersetzen des zentralen Pixelwerts (X) durch den Durchschnittswert, der dem zentralen Pixelwert am nächsten ist.

2. Verfahren gemäß Anspruch 1, wobei benachbarte Pixelwerte (X, A-H) aus benachbarten Pixeln abgeleitet werden.

3. Verfahren gemäß Anspruch 1 oder Anspruch 2, wobei die aus der Anwendung des Verfahrens auf einen ersten zentralen Pixelwert (14) erhaltenen Ausgänge als die Eingänge für die Anwendung des Verfahrens auf einen zweiten Pixelwert (16) verwendet werden.

4. Verfahren gemäß Anspruch 3, wobei der zweite Pixelwert (16) ein benachbarter Pixelwert des ersten Pixelwerts (14) ist.

5. Verfahren gemäß einem der vorhergehenden Ansprüche, angewendet auf einen Satz fehlerhafter Pixelpaare (14,16) in einem Bild.

6. Verfahren gemäß einem der vorhergehenden Ansprüche, selektiv angewendet auf Pixelwerte, die sich oberhalb oder unterhalb eines vorbestimmten Schwellenwerts befinden.

7. Verfahren gemäß Anspruch 6, wobei der vorbestimmte Schwellenwert variiert werden kann, um einen Grad der Filterungsschwere auszuwählen.

8. Vorrichtung zum Filtern eines Signals, das eine Vielzahl von Pixelwerten (X, A-H) beinhaltet, von denen jeder aus mindestens einem Pixel einer Bildsensoranordnung erhalten wird, die Folgendes beinhaltet:
Lesemittel zum Erhalten eines zentralen Pixelwerts (X) und einer Vielzahl von benachbarten Pixelwerten (A-H); und durch Folgendes **gekennzeichnet**:
Berechnungsmittel zum Bestimmen des Durchschnitts jedes entgegengesetzten Paars Pixelwerte (A/E; B/F; C/G; D/H); Vergleichen jedes Werts mit dem zentralen Pixelwert (X) und Ersetzen des zentralen Pixelwerts (X) durch den Durchschnittswert, der dem zentralen Pixelwert (X) am nächsten ist.

9. Vorrichtung gemäß Anspruch 8, wobei benachbarte Pixelwerte aus benachbarten Pixeln abgeleitet werden.

10. Vorrichtung gemäß Anspruch 8 oder Anspruch 9, die ferner Speichermittel beinhaltet, um die aus einem ersten zentralen Pixelwert (14) erhaltenen Ausgänge zu speichern, wobei die Ausgänge die Eingänge für das Berechnungsmittel bilden, wenn die Vorrichtung auf einem zweiten Pixelwert (16) arbeitet.

11. Vorrichtung gemäß Anspruch 10, wobei der zweite Pixelwert (16) ein benachbarter Pixelwert des ersten Pixelwerts (14) ist.

12. Vorrichtung gemäß einem der Ansprüche 8 bis 11, die angeordnet ist, um auf einem Satz fehlerhafter Pixelpaare (14, 16) in einem Bild zu arbeiten.

13. Vorrichtung gemäß einem der Ansprüche 8 bis 12, die ferner Mittel beinhaltet, um Pixelwerte auszuwählen, die sich oberhalb oder unterhalb eines vorbestimmten Schwellenwerts zum Betrieb auf der Vorrichtung befinden.

14. Vorrichtung gemäß Anspruch 13, wobei der vorbestimmte Schwellenwert variiert werden kann, um einen Grad der Filterungsschwere auszuwählen.

15. Ein CMOS-Bildsensor, der die Vorrichtung gemäß einem der Ansprüche 8 bis 14 beinhaltet.

16. Eine optische Maus, ein Mobiltelefon oder eine Digitalkamera, die den CMOS-Bildsensor gemäß Anspruch 15 beinhalten.

## Revendications

1. Une méthode pour filtrer un signal comprenant une pluralité de valeurs de pixel (X, A à H) qui sont chacune obtenues à partir d'au moins un pixel d'un réseau de détection d'images, en obtenant une valeur de pixel centrale (X) et une pluralité de valeurs de pixel voisines (A à H) ; la méthode étant **caractérisée par** les étapes de : déterminer la valeur moyenne de chaque paire opposée de valeurs de pixel (A / E ; B / F ; C / G ; D / H) ; comparer chaque valeur moyenne à la valeur de pixel centrale (X) ; et remplacer la valeur de pixel centrale (X) avec la valeur moyenne qui est la plus proche de la valeur de pixel centrale.

2. La méthode de la revendication 1, dans laquelle des valeurs de pixel voisines (X, A à H) sont dérivées de pixels voisins.

3. La méthode de la revendication 1 ou de la revendication 2, dans laquelle les sorties obtenues de l'application de la méthode sur une première valeur de pixel centrale (14) sont utilisées comme entrées pour l'application de la méthode sur une deuxième valeur de pixel (16).

4. La méthode de la revendication 3, dans laquelle la deuxième valeur de pixel (16) est une valeur de pixel voisine de la première valeur de pixel (14).

5. La méthode de n'importe quelle revendication précédente, appliquée sur un ensemble de couplets de pixels défectueux (14,16) dans une image.

6. La méthode de n'importe quelle revendication précédente, appliquée de façon sélective sur des valeurs de pixel qui sont au-dessus ou en dessous d'un seuil prédéterminé.

7. La méthode de la revendication 6, dans laquelle il est possible de faire varier le seuil prédéterminé pour sélectionner un niveau de sévérité de filtrage.

8. Appareil destiné à filtrer un signal comprenant une pluralité de valeurs de pixel (X, A à H) qui sont chacune obtenues à partir d'au moins un pixel d'un réseau de détection d'images, comprenant :
un moyen de lecture destiné à obtenir une valeur de pixel centrale (X) et une pluralité de valeurs de pixel voisines (A à H) ; et **caractérisé par** :
un moyen de calcul destiné à déterminer la moyenne de chaque paire opposée de valeurs de pixel (A / E ; B / F ; C / G ; D / H) ; comparer chaque valeur à la valeur de pixel centrale (X) ; et remplacer la valeur de pixel centrale (X) avec la valeur moyenne qui est la plus proche de la valeur de pixel centrale (X).

9. L'appareil de la revendication 8, dans lequel des valeurs de pixel voisines sont dérivées de pixels voisins.

10. L'appareil de la revendication 8 ou de la revendication 9, comprenant en outre un moyen formant mémoire pour stocker les sorties obtenues d'une première valeur de pixel centrale (14), lesdites sorties formant les entrées pour le moyen de calcul lorsque l'appareil opère sur une deuxième valeur de pixel (16).

11. L'appareil de la revendication 10, dans lequel la deuxième valeur de pixel (16) est une valeur de pixel voisine de la première valeur de pixel (14).

12. L'appareil de n'importe lesquelles des revendications 8 à 11, agencé pour opérer sur un ensemble de couplets de pixels défectueux (14, 16) dans une image.

13. L'appareil de n'importe lesquelles des revendications 8 à 12, comprenant en outre un moyen pour sélectionner des valeurs de pixel qui sont au-dessus ou en dessous d'un seuil prédéterminé pour que l'appareil opère sur celles-ci.

14. L'appareil de la revendication 13, dans lequel il est possible de faire varier le seuil prédéterminé pour sélectionner un niveau de sévérité de filtrage.

15. Un capteur d'images CMOS comprenant l'appareil de n'importe lesquelles des revendications 8 à 14.

16. Une souris optique, un téléphone portable ou un appareil photo numérique comprenant le capteur d'images CMOS de la revendication 15.
